# EUROPEAN PATENT SPECIFICATION

(11) **EP 2 081 119 B1**
(45) Date of publication and mention of the grant of the patent: **07.03.2018**
(21) Application number: 08150382.3
(22) Date of filing: 17.01.2008
(51) Int. Cl.: G06F 17/27, G06F 3/023

(54) **Obtaining new language objects for a temporary dictionary used by a disambiguation routine**
Erhaltung neuer Sprachobjekte für ein temporäres Lexikon, welches von einer Disambiguationsroutine verwendet wird
Obtention des nouveaux objets linguistiques pour une dictionnaire temporaire utilisée par une routine de désambiguïsation

(43) Date of publication of application: 22.07.2009
(73) Proprietor: BlackBerry Limited, Waterloo, ON N2K 0A7 (CA)
(72) Inventor: Vuong, Thanh, Waterloo, Ontario N2L 3W8 (CA); Arastafar, Martin, Waterloo, Ontario N2L 3W8 (CA)
(74) Representative: Roberts, Gwilym Vaughan

(56) References cited:
- EP-A- 1 717 668
- US-A1- 2005 289 141
- US-A1- 2006 217 965

## Description

### BACKGROUND

### Field

The disclosed and claimed concept relates generally to handheld electronic devices employing a text disambiguation function, and, more particularly, to a method that is executable on a handheld electronic device for obtaining new language objects for a temporary dictionary used by the text disambiguation function.

### Description of the Related Art

Numerous types of handheld electronic devices are known. Examples of such handheld electronic devices include, for instance, personal data assistants (PDAs), handheld computers, two-way pagers, cellular telephones, and the like. Many handheld electronic devices also feature wireless communication capability, although many such handheld electronic devices are stand-alone devices that are functional without communication with other devices.

Such handheld electronic devices are generally intended to be portable, and thus are of a relatively compact configuration in which keys and other input structures often perform multiple functions under certain circumstances or may otherwise have multiple aspects or features assigned thereto. With advances in technology, handheld electronic devices are built to have progressively smaller form factors yet have progressively greater numbers of applications and features resident thereon. As a practical matter, the keys of a keypad can only be reduced to a certain small size before the keys become relatively unusable. In order to enable text entry, however, a keypad must be capable of entering all alphabetic letters, for instance, twenty-six letters of the Roman alphabet, as well as appropriate punctuation, digits, and other symbols.

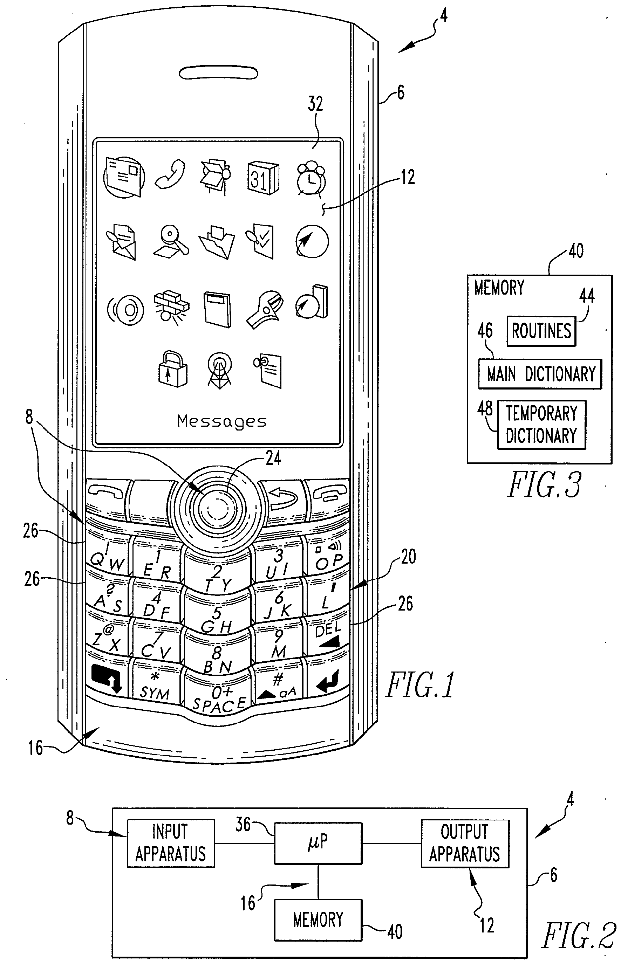

One way of providing numerous letters in a handheld electronic device having a small form factor is to provide a "reduced keyboard" in which multiple letters, symbols, and/or digits, and the like, are assigned to any given key. For example, touch-tone telephones typically include a reduced keyboard having twelve keys, of which ten keys have digits thereon, and of these ten keys, eight have Roman letters assigned thereto. For instance, one of the keys includes the digit "2" as well as the letters "A", "B", and "C". Since a single actuation of such a key potentially could be intended by the user to refer to any of the letters "A", "B", and "C", and potentially could also be intended to refer to the digit "2", the input (by actuation of the key) generally is an ambiguous input and is in need of some type of disambiguation in order to be useful for text entry purposes. Other known reduced keyboards have included other arrangements of keys, letters, symbols, digits, and the like. One example of a reduced keyboard is the keypad 20 forming a part of the handheld electronic device 4 shown in Figure 1 and described in greater detail herein, which is an improved handheld electronic device in accordance with the disclosed and claimed concept. Keys 26 of the keypad 20 are arranged in what is known as a reduced QWERTY keyboard arrangement.

In order to enable a user to make use of the multiple letters, digits, and the like on any given key in an ambiguous keyboard, numerous keystroke interpretation systems have been provided. For instance, a "multi-tap system" allows a user to substantially unambiguously specify a particular linguistic element, for example, on a key by pressing the same key a number of times equal to the position of the desired linguistic element on the key. Another keystroke interpretation system includes key chording in which keys are pressed in various combinations to achieve particular results. Still another keystroke interpretation system might include a software-based text disambiguation system which seeks to interpret the keystrokes in view of stored dictionary data, linguistic rules, stored algorithms, and/or the like. One example of such a system is disclosed in commonly owned United States Patent Application Publication No. 2006/0058995, entitled "Handheld Electronic Device With Text Disambiguation."

While such software-based text disambiguation systems have been generally effective for their intended purposes, such disambiguation systems are not without limitation. In certain applications, the function of a software-based text disambiguation system can be cumbersome if a user must expend substantial effort in entering text. One such situation in which this may occur is in the context of a word or other language object that may not already be in the stored dictionary. Another exemplary situation in which this may occur is when a word or other language object is already stored in the dictionary but is considered to have a relatively low frequency. As a result of the relatively low frequency, entering the word or other language object may require significant input effort by the user.

One particular situation in which this is likely to occur is when a user of a handheld electronic device has viewed one or more web pages that include such a word or other language object in the text thereof, and thereafter the user wants to use that word or other language object while, for example, composing an email. For instance, if a user views a web page that includes an article about Tchaikovsky or a treatment for hepatocellular carcinoma (a type of cancer) and then wants to input text, such as in an email, about those subjects, it is likely that the words "Tchaikovsky," "hepatocellular" and "carcinoma" are not included in the stored dictionary or, if stored, have a relatively low frequency. As a result, the user must expend substantial effort in inputting those words. It thus would be therefore desirable to provide a handheld electronic device having a reduced keyboard wherein the device will make available to a user words which are not in the stored dictionary or, if stored, have a relatively low frequency, when there is a reasonable expectation that the user may want to use those words in the near future when inputting text..

EP-A-1717668 discloses scanning incoming emails, instant messages, SMS, and MMS, for new language objects such as words, abbreviations, text shortcuts and, in appropriate languages, ideograms, that are placed in a list for use by a text input process of a handheld electronic device to facilitate the generation of text.

US 2006/217965 is directed to an improved handheld electronic device having a reduced keyboard provides facilitated language entry by making available to a user certain words that a user may reasonably be expected to enter. In some situations, certain words can be stored, for example, in a temporary dictionary for use in particular situations. For instance, the names of the recipients of an electronic message might be stored in a temporary dictionary for rapid retrieval when entering a salutation in the message. As another example, a number of the words in an existing electronic message may be stored in a temporary dictionary and made available to a user when replying to or forwarding the message since the existing message might include words that the user might reasonably be expected to type in the reply message or the forwarded message.

The invention is set out in the claims.

A full understanding of the disclosed and claimed concept can be gained from the following Description when read in conjunction with the accompanying drawings in which:
Figure 1 is a front view of an improved handheld electronic device in accordance with the disclosed and claimed concept;
Figure 2 is a block diagram of the handheld electronic device of Figure 1;
Figure 3 is a schematic representation of the memory of the handheld electronic device of Figures 1 and 2;
Figures 4A, 4B and 4C are a flowchart illustrating a method of adding language objects to the temporary dictionary of the handheld electronic device of Figures 1 and 2 according to one example embodiment of the disclosed and claimed concept;
Figure 5 is a flowchart illustrating a method for updating the temporary dictionary according to another example embodiment of the disclosed and claimed concept;
Figure 6 is a flowchart illustrating a method for adding language objects to the main dictionary according to yet another example embodiment of the disclosed and claimed concept.

### DESCRIPTION

In one example embodiment, the disclosed and claimed concept provides a method of obtaining data for use on a handheld electronic device that has communications capabilities and that includes a processor and a memory. The memory has stored therein: (i) one or more routines executable by the processor which provide a text disambiguation function, and (ii) a dictionary including a number of first language objects. The dictionary is accessible by the one or more routines for use in disambiguating ambiguous inputs received by the handheld electronic device. The method includes receiving a block of information on the handheld electronic device, displaying a representation of at least a portion of the block of information on the handheld electronic device, and determining whether at least one of one or more predetermined events has occurred, wherein each of the one or more predetermined events have been deemed in advance to indicate that the block of information includes one or more language objects that should be made accessible by the one or more routines for use in disambiguating ambiguous inputs received by the handheld electronic device. If it is determined that at least one of the one or more predetermined events has occurred, the method further includes obtaining a number of second language objects from the block of information and storing the number of second language objects in a temporary dictionary included in the memory. The temporary dictionary, and thus the second language objects, is accessible by the one or more routines for use in disambiguating ambiguous inputs received by the handheld electronic device. In one example embodiment, the block of information is a web page that includes text and/or graphics. For illustrate purposes, such a web page is used herein to describe the disclosed and claimed concept. That, however, is meant to be exemplary only and should not be considered to be limiting. For example, and without limitation, the block of information could include a text message, an instant message or an email message.

The one or more predetermined events includes a predetermined period of time passing following the displaying step without the handheld electronic device receiving an additional input from the user, and may further include the handheld electronic device receiving an input from the user requesting that a second representation of at least a second portion of the block of information be displayed on the handheld electronic device.

In one example embodiment, the storing of the number of second language objects in a temporary dictionary comprises storing the number of second language objects in a record associated with the block of information and deleting the record from the memory after a predetermined period of time has passed since the storing. In addition, the method may further include steps of receiving a first ambiguous input in the handheld electronic device, employing the one or more routines to disambiguate the first ambiguous input and display a number of possible intended inputs on the handheld electronic device, receiving a selection of one of the possible intended inputs, determining whether the selected one of the possible intended inputs is based on one of the second language objects stored in the temporary dictionary, and if the selected one of the possible intended inputs is based on one of the second language objects stored in the temporary dictionary, saving the one of the second language objects in the dictionary. The method may also further include deleting the one of the second language objects from the temporary dictionary.

The disclosed and claimed concept also provides a handheld electronic device that includes a reduced keyboard, a display, a processor, and a memory having stored therein: (i) one or more routines executable by the processor which are adapted to provide a text disambiguation, and (ii) a dictionary including a number of first language objects that is accessible by the one or more routines for use in disambiguating ambiguous inputs received by the handheld electronic device. The one or more routines are further adapted to implement one or more embodiments of the method just described.

An improved handheld electronic device 4 in accordance with the disclosed and claimed concept is indicated generally in Figure 1 and is depicted schematically in Figure 2. The improved handheld electronic device 4 comprises a housing 6, and further comprises an input apparatus 8, an output apparatus 12, and a processor apparatus 16 disposed in the housing 6. The input apparatus 8 provides input to the processor apparatus 16. The processor apparatus 16 provides output signals to the output apparatus 12. As described elsewhere herein, the present exemplary embodiment of the handheld electronic device 4 includes applications and/or routines resident thereon such as, for example, and without limitation, a software-based text disambiguation system, a web browser and an e-mail and/or other messaging client, although other and/or additional applications and/or routines can be provided without departing from the disclosed and claimed concept.

The input apparatus 8 comprises a keypad 20 and a trackball 24. The keypad 20 in the exemplary embodiment depicted herein comprises a plurality of keys 26 that are each actuatable to provide input to the processor apparatus 16. The trackball 24 is rotatable to provide navigational and other input to the processor apparatus 16, and additionally is translatable in a direction inwardly toward the handheld electronic device 4 to provide other inputs, such as selection inputs. The trackball 24 is freely rotatable on the housing 6 and thus is able to provide navigational inputs in the vertical direction, i.e., the up-down direction, in the horizontal direction, i.e., the left-right (side to side) direction, as well as combinations thereof. In addition, the trackball 24 may be adapted to provide navigational inputs in diagonal directions. The keys 26 and the trackball 24 serve as input members which are actuatable to provide input to the processor apparatus 16. Alternative mechanisms for providing similar multi-directional navigation may be used in place of the trackball 24, such as, without limitation, a joystick, a touchpad, a touch-sensitive display, and hard buttons disposed on the housing 6 of the handheld electronic device 4. The exemplary output apparatus 12 comprises a display 32.

Many of the keys 26 each have a plurality of letters, i.e., linguistic elements, assigned thereto. For instance, one of the keys 26 has assigned thereto the letters "A" and "S". Another of the keys 26 has assigned thereto the letters "Q" and "W". The letters of the exemplary keypad 20 are in an arrangement of a reduced QWERTY keyboard. In the present example embodiment, the exemplary letters are Roman letters, and the exemplary Roman letters serve as linguistic elements for text input into the handheld electronic device 4. It is understood that while the linguistic elements of the instant example embodiment are depicted as being characters, specifically Roman letters, the linguistic elements could be other elements such as, for example and without limitation, other types of characters, ideograms, portions of ideograms such as strokes, and other elements that can be used in the generation of words in a language. It is noted that the expressions "text" and "word", and variations thereof, are to be broadly construed herein and are not intended to be limiting in any fashion with regard to a particular language, a particular portion of a language or a means of providing an expression in a language, or to a particular language type or format. Moreover, the expressions "text" or "word" are not limited to words in a vocabulary and also include names, nomenclatures, abbreviations, etc.

The processor apparatus 16 comprises a processor 36 and a memory 40. The processor 36 may be, for example and without limitation, a microprocessor (*µ*P) that interfaces with the memory 40. The memory 40 can be any one or more of a variety of types of internal and/or external storage media such as, without limitation, RAM, ROM, EPROM(s), EEPROM(s), FLASH, and the like that provide a storage register, i.e., a machine readable medium, for data storage in a similar fashion to an internal memory storage of a computer, and can be volatile memory or nonvolatile memory. The memory 40 has stored therein a number of routines 44 (shown in Figure 3) that are executable on the processor 36. As employed herein, the expression "a number of" and variations thereof shall refer broadly to any nonzero quantity, including a quantity of one. One or more of the routines 44 implement a software-based text disambiguation system that is operable to disambiguate ambiguous text input, such as when one or more of the keys 26 having a plurality of letters assigned thereto is actuated, and provide to the user a number of possible intended inputs that may be selected. Other routines 44 can include a text editing system having an email text editor for composing email or other text messages from inputted text. Other routines can implement a web browser application to access, display and/or retrieve web page information including words or character combinations in web pages.

As seen in Figure 3, the memory 40 includes a main dictionary 46 that has a plurality of language objects and frequency objects stored therein. The language objects are representative of words or word fragments. The language objects and the frequency objects are associated. A given frequency object is a frequency value indicative of the relative frequency within the relevant language of the given word or word fragment represented by the language object. The memory 40 includes other objects stored and organized therein, as will be described in greater detail below.

When executed by the processor 36, the software-based text disambiguation system interfaces with the memory 40 and the objects stored therein to provide output in response to input via the input apparatus 8. In accordance with the disclosed and claimed concept, and as described in detail elsewhere herein, certain words or other language objects may be stored in a temporary dictionary 48 (which may comprise a number of storage registers) in the memory 40 and be used by the software-based text disambiguation system to disambiguate ambiguous inputs entered by the user. The words or other language objects in such a temporary dictionary 48. may be accorded a relatively high frequency value in order that such words or other language objects, if appropriate, will be presented in whole or in part to the user at an early opportunity during the text entry process to limit the editing effort and other input that might otherwise be required to enter such words or other language objects.

In a situation where, for example, a user has viewed one or more web pages using a web browser application of the handheld electronic device 4 that have therein words or other language objects that are either not stored in the main dictionary 46 or, if stored, have a relatively low frequency associated therewith, the user may thereafter want to use those words or other language objects in, for example, composing an email using the email text editor of the handheld electronic device 4. In accordance with an aspect of the disclosed and claimed concept, and as described in more detail below, certain words or other language objects are advantageously stored in the temporary dictionary 48 in the memory 40 for ready use by software-based text disambiguation system when inputting text.

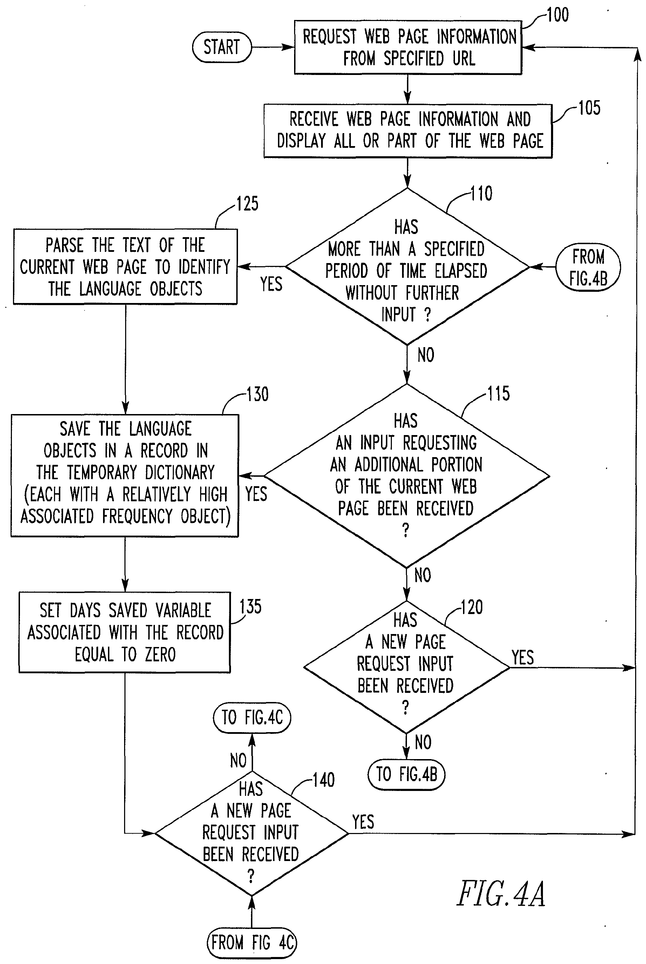

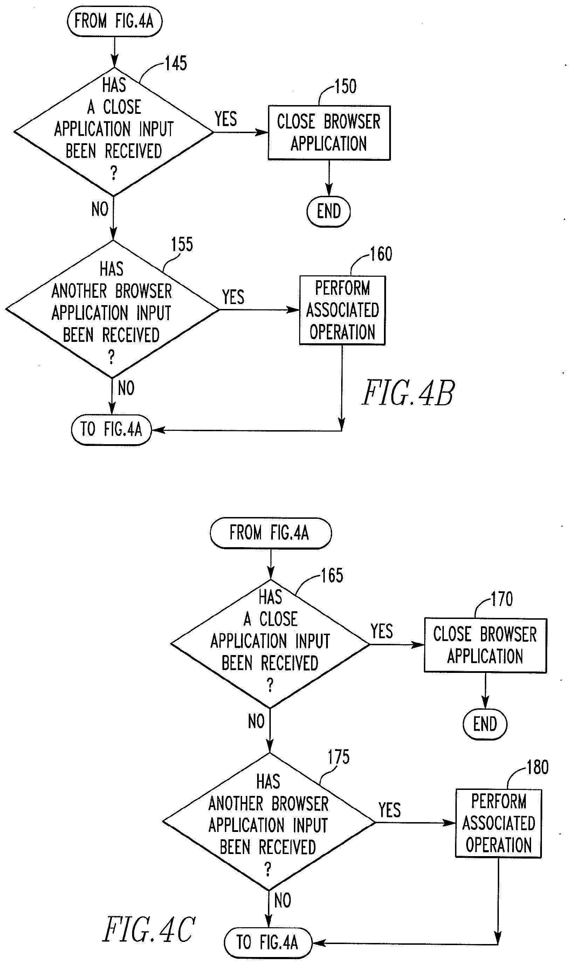

Figures 4A, 4B and 4C are a flowchart illustrating a method of adding language objects to the temporary dictionary 48 of the memory 40 of the handheld electronic device 4 according to one example embodiment of the disclosed and claimed concept. In the example method described in relation with Figures 4A, 4B and 4C, the method causes language objects to be added to the temporary dictionary 48 based upon a user web browsing activities using the web browser application, with the result being that certain language objects, such as words or character combinations included in the text of web pages downloaded to the handheld electronic device 4 and added to the temporary dictionary 48. Thereafter, preferably for at least some predetermined period as described below, those words will be used by the software-based text disambiguation system included as part of the routines 44 of the handheld electronic device 4 when it disambiguates text inputted by a user.

Referring to Figures 4A, 4B and 4C, the method begins at step 100 wherein, using the web browser application included as part of the routines 44 and the input apparatus 8, a user requests a specific web page. A used herein, the term "web page" shall refer to a block of information, sometimes referred to as a document, containing text and/or graphics running on a web server available on the World Wide Web and identified by a specific uniform resource locator (URL). Such pages are most often written in HTML. It is also possible for a server to create a dynamic web page via special scripts. Typically, a number of web pages together make up a web site. It is also possible for a server to create a dynamic web page via special scripts. A web page may be many screens long when viewed, or many pages long if actually printed out. When a user requests a specific web page, the web browser application will request the web page information from the specified URL over the network or networks to which the handheld electronic device 4 is operatively connected. It should be understood, however, that the term "block of information" as used herein is not limited to just web pages, but may include other data including text, such as, without limitation, an email message, an SMS message, an MMS message, an instant message or an attachment to any such messages such as a document created using a word processing application.

Next, at step 105, the handheld electronic device 4 will receive the web page information (i.e. downloaded to the handheld electronic device 4 over the network or networks to which the handheld electronic device 4 is operatively connected) and display on the display 32 all or part of the web page information (all of the web page information will be displayed on the display if it can fit on one screen of the display 32, and only part of the web page information will be displayed if the entirety of the web page will not fit on a single screen). Once the web page information is received at the handheld electronic device 4 in this manner, the user has a number of options for providing operational inputs into the handheld electronic device 4 using the input apparatus 8, with each option resulting in a different operation being performed by the handheld electronic device 4. Specifically, a user may use the trackball 24 to scroll up and down (and left and right) on the currently displayed web page information. When a user scrolls down on a web page information using the track ball 24, the "lower end" portions of the web page information that could not previously be displayed will then be displayed on the display 32, and correspondingly, certain "upper portions" of the web page will no longer be displayed on the display 32. Scrolling up web page information causes the opposite to occur. A user may also navigate up and down (and left and right) the web page information in a number of ways using various keys 26 of the keypad 20. For example, and without limitation, a user may move down a single screen on a currently displayed web page information by pressing a particular key, such as the "9" key 26, may move up a single screen on the currently displayed web page by pressing another particular key, such as the "3" key 26, may move to the bottom of the current web page by pressing another particular key, such as the "7" key 26, and may move to the top of the current web page by pressing still another particular key, such as the "1" key 26.

Furthermore, a user may request receiving other web page information specified by a different URL at the handheld electronic device 4 in a number of ways. For example, the user may use the trackball 24 or another navigational input to scroll over and highlight the hyperlink included in the currently displayed web page information and press the trackball 24 to request the web page information associated with that hyperlink. The user may also request a particular web page when the associated hyperlink is highlighted by pressing the space bar key 26 (or some other designated key 26) or by accessing a menu using the input apparatus 8 (which menu is displayed on the display 32) and selecting a "get link" selection from the displayed menu. Again, these inputs are meant to be exemplary only, and it will be appreciated that any number of other navigational options may be utilized without departing from the scope of the disclosed and claimed concept.

Thus, as just described, for purposes of the disclosed and claimed concept, the relevant operational inputs may be generally classified into two categories (i) inputs where the user is requesting that additional portions of the current web page be displayed on the display 32 (which information has already been downloaded to the handheld electronic device 4), and (ii) inputs where the user is requesting that a new web page be received at the handheld electronic device 4.

Returning to Figures 4A, 4B and 4C, once the web page information for the current web page has been received and displayed in step 105, the method proceeds to step 110, wherein a determination is made as to whether more than a specified period of time has elapsed without any further operational input from the user. This specified period of time is some predetermined amount of time that is intended to signify that the user has an actual interest in the information included in the current web page and may be, for example, five seconds. The duration of specified period of time can be determined based on size of memory 40, performance of the processor 36, or other variants.

If the answer at step 110 is no, then, at step 115, a determination is made as to whether an operational input has been received from the user which requests that an additional portion of the current web page be displayed on the display 32 (see input category (i) above). Such operational input may take any of a number of forms, examples of which have been described above. If the answer at step 115 is no, then at step 120, a determination is made as to whether an operational input has been received from the user which indicates that the user would like to have a new web page received at the handheld electronic device 4 (see input category (ii) above). Such operational input may take a number of forms, examples of which have been described above. If the answer at step 120 is yes, then the method returns to step 100, wherein the web page information specified by the particular URL is requested by and downloaded to the handheld electronic device 4. If the answer at step 120 is no, then the method proceeds to step 145 (Figure 4B), wherein a determination is made as to whether an operational input indicating a desire to close the web browser application has been received. If the answer is yes, then, at step 150, the application is closed and the method ends. If, however, the answer is no, then, at step 155, a determination is made as to whether an operational input requesting some other browser operation, such as, without limitation, adding a bookmark or checking history, among others, is received. If the answer is yes, then, at step 160, the operation is performed. If the answer at step 155 is no, or following step 160, whichever the case may be, the method returns to step 110 to determine whether the specified time period has elapsed.

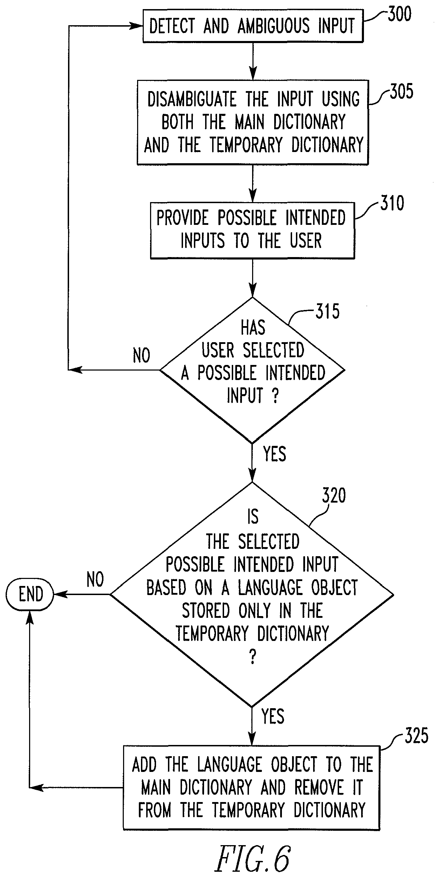

If the answer at either step 110 or step 115 is yes, meaning that either the specified time period has elapsed without further operational input, or that an operational input requesting an additional portion of the current web page has been received, then the method proceeds to step 125. As described below, positive answers to either of the questions raised at steps 110 and 115 will, according to an aspect of the disclosed and claimed concepts, trigger the addition of one or more language objects from the current web page to the temporary dictionary 48. Specifically, at step 125, the text of the current web page that has been downloaded to the handheld electronic device 4 is parsed in order to identify the individual language objects contained therein. Then, at step 130, each of the language objects that is identified at step 125 is saved in a record in the temporary dictionary 48 that is associated with the current web page (the data may be stored in a cache memory or some other suitable temporary memory register). In addition, each language object that is saved in the temporary dictionary 48 has associated with it a relatively high frequency object (i.e., a frequency object value that would indicate a relatively high frequency within the relevant language of the language object in question). A relatively high frequency value is assigned to the language object while in the temporary dictionary because the disclosed concept assumes that it is likely that the user may want to actually use those language objects in the short term when entering text. Then, at step 135, a days saved variable, the significance of which will become apparent below, that is associated with the record created in step 130 is set equal to zero. Preferably, if a language object that is saved in the temporary dictionary 48 is determined to also be saved in the main dictionary 46, then the frequency object that is associated with that language object in the temporary dictionary 48 will be made higher than the frequency object that is associated with that language object in the main dictionary 46 (this is done because, as noted above, the disclosed and claimed concept assumes that it is likely that the user may want to actually use that language object in the short term when entering text). Thereafter, when the software-based text disambiguation system of the handheld electronic device 4 disambiguates user text input (See step 305 of Figure 6), the disambiguation system will, according to an aspect of the disclosed concept, preferably use the higher of the two frequency object values.

Next, at step 140, a determination is made as to whether an input requesting a new web page, described elsewhere herein, has been received. If the answer is yes, then the method returns to step 100. If, however, the answer at step 140 is no, then the method proceeds to step 165 (Figure 4C), wherein a determination is made as to whether an operational input indicating a desire to close the web browser application has been received. If the answer is yes, then, at step 170, the application is closed and the method ends. If, however, the answer is no, then, at step 175, a determination is made as to whether an operational input requesting some other browser operation, such as, without limitation, adding a bookmark or checking history, among others, is received. If the answer is yes, then, at step 180, the operation is performed. If the answer at step 175 is no, or following step 180, whichever the case may be, the method returns to step 140 to determine whether a request for a new web page download has been received.

Thus, the method described in connection with Figures 4A, 4B and 4C will result in language objects, such as words or other character combinations, from the text of a current web page that has been received at the handheld electronic device 4 being added to the temporary dictionary 48 when, based on certain predefined heuristics or rules, an event has occurred that is deemed to indicate that the user has an actual interest in the information included on the current web page. In Figure 4A, events include either the fact that the user has been viewing the web page without further input for more than some specified time period (step 110) or the fact that the user has provided an input which requests that an additional portion from the current web page be displayed on the display 32. Then, and only then, are the language objects parsed from the current web page added to the temporary dictionary 48 for later use in facilitating the entry of text using the software-based text disambiguation system of the handheld electronic device 4. If the specified time without an additional input has not passed, or if any other input is received, no language objects are added to the temporary dictionary 48.

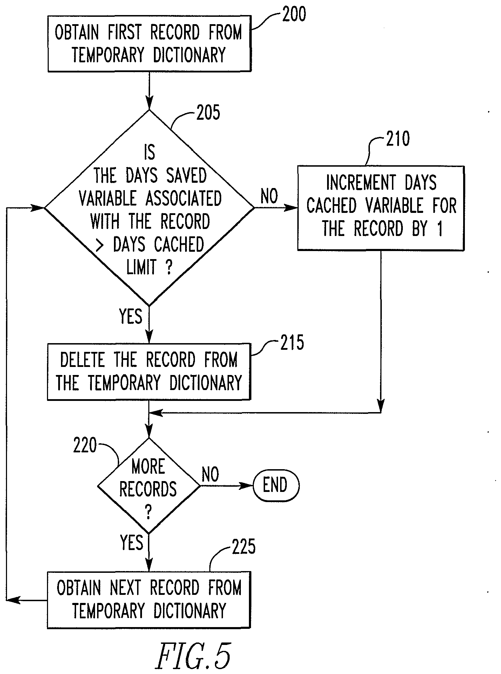

According to a further aspect of the disclosed and claimed concept, language objects that are added to the temporary dictionary 48 are preferably only saved for a limited amount of time, after which they are deleted. In particular, each record that is created in step 130 will be saved as part of the temporary dictionary 48 for some predetermined amount of time, after which that record will be deleted. Figure 5 is a flowchart illustrating one embodiment for updating the temporary dictionary 48 in this manner. Preferably, the updating method shown in Figure 5 is performed by the handheld electronic device 4 once a day at some preset time, for example at 12:00 am.

Referring to Figure 5, the method begins at step 200, wherein the first record from the temporary dictionary 48 is obtained. Next, at step 205, a determination is made as to whether the days saved variable associated with the record is greater than a preset days saved limit. The predetermined days saved limit is the number of days that the language objects from a particular web page are to be stored as part of the temporary dictionary 48. This value may be some default value established at the time that the handheld electronic device 4 is manufactured and/or may be selectively adjusted by the user. Preferably, that value will be some number of days that is thought to represent a reasonable time period that a user may be interested in utilizing the language objects (e.g. words) that were contained in a web page that the user accessed using the handheld electronic device 4. For example, the days saved limit may be set to three days, which is likely a reasonable amount of time during which a user may have continued interest in a web page that he or she has viewed.

If the answer at step 205 is no, then, at step 210, the days saved variable for the current record is incremented by one unit. If, however, the answer at step 205 is yes, then, at step 215, the current record is deleted from the temporary dictionary 48. Following either step 210 or step 215, as appropriate, the method proceeds to step 220, wherein a determination is made as to whether there are more records remaining in a temporary dictionary 48. If the answer is no, then the method ends. If the answer is yes, then, at step 225, the next record is obtained from the temporary dictionary 48 and the method returns to step 205. Thus, as a result of the method shown in Figure 5, language objects added to the temporary dictionary 48 will only remain in the temporary dictionary 48 for a finite amount of time, rather than indefinitely.

In an alternative method, when a language object is saved in the temporary dictionary, it has a day/time stamp associated with it that indicates the day and the time at which it was saved (preferably rounded up to the nearest hour (e.g., a record saved at 11:58 pm on one day would have a day/time stamp of 12:00 am of the following day). Then, once a day, the day/time stamp for each saved language object is examined and compared to the current day and time to determined an amount of time (e.g., in hours) that the record has been saved. If the determined amount of time exceeds some preset value, e.g., 36 hours, the language object is deleted from the temporary dictionary 48.

According to still a further aspect of the disclosed and claimed concept, language objects that have been added to the temporary dictionary 48 and that are not included in the main dictionary 46 may be moved to and added to the main dictionary 46 under certain circumstances. In particular, if a language object from the temporary dictionary 48 is actually selected by the user when inputting text using the software-based text disambiguation system, that language object will be moved from the temporary dictionary 48 to the main dictionary 46 so that it will thereafter be permanently available.

Figure 6 is a flowchart illustrating one embodiment of a method for adding language objects to the main dictionary 46 according to the disclosed and claimed concept. The method begins at step 300, wherein the handheld electronic device 4, in a mode in which the software-based text disambiguation system is being employed, detects an ambiguous input from the user pressing one or more of the keys 26. Next, at step 305, the software-based text disambiguation system will disambiguate the input and generate a number of possible intended inputs using both the main dictionary 46 and the temporary dictionary 48 in, for example, the manner described in the aforementioned commonly owned United States Patent Application Publication No. 2006/0058995, entitled "Handheld Electronic Device With Text Disambiguation,". In the case where a language object that is in both the main dictionary 46 and the temporary dictionary 48 is employed in the disambiguation process, the frequency value from the temporary dictionary 46 will preferably be used.

Next, at step 310, the software-based text disambiguation system provides the number of possible intended inputs to the user by displaying those possible intended inputs on the display 32. Then, at step 315, a determination is made as to whether the user has selected one of the provided possible intended inputs. If the answer is no, then the method returns to step 300. If, however, the answer is yes, then, at step 320, a determination is made as to whether the selected possible intended input was generated based on a language object that is stored only as part of the temporary dictionary 48 (i.e., it is not also in the main dictionary 46). If the answer is no, then the method ends. If, however, the answer at step 320 is yes, meaning that the user selected a possible intended input for actual textual input that was generated from an entry only found in the temporary dictionary 48, then, at step 325, the language object from which the selected possible intended input was generated is added to the main dictionary 46 and removed from the temporary dictionary 48. When that language object is added to the main dictionary 46, it is assigned a frequency object which is associated with it. The value of this frequency object may be obtained in a number of ways. For example, it may by default be assigned a relatively high frequency value since the language object was not before part of the main dictionary 46. Alternatively, the frequency values may be assigned based on some characteristic of the language object, such as its length (e.g., language objects having less than a given umber of characters, such as five, may be assigned a relatively low frequency value and language objects having more than the given umber of characters may be assigned a relatively low frequency value. Thus, as a result of the method shown in Figure 6, language objects which were not previously stored in the main dictionary 46 but which were added to the temporary dictionary 48 as a result of a user viewing a web page containing the language object and which were subsequently actually input as text by the user are added to the main dictionary 46 so that thereafter they will be used by the software-based text disambiguation system of the handheld electronic device 4. This is done because if a user has entered that text once, there is a chance that the user may want to enter it again, and if the language object is included in the main dictionary 48, it will be easier for the user to enter that text using the software-based text disambiguation system.

While preferred embodiments of the invention have been described and illustrated above, it should be understood that these are exemplary of the invention and are not to be considered as limiting. Additions, deletions, substitutions, and other modifications can be made without departing from the scope of the present invention. Accordingly, the invention is not to be considered as limited by the foregoing description but is only limited by the scope of the appended claims.

## Claims

1. A method of obtaining data for use on a handheld electronic device (4) that includes a processor (36) and a memory (40), the memory having stored therein: (i) one or more routines executable by the processor and providing a text disambiguation function, and (ii) a dictionary including a number of first language objects that is accessible by the one or more routines for use in disambiguating ambiguous inputs received by the handheld electronic device, the method comprising:
receiving (105) a block of information on the handheld electronic device;
displaying (105) a representation of at least a portion of said block of information on the handheld electronic device;
determining (10, 15) whether at least one of one or more predetermined events has occurred following said displaying, each of said one or more predetermined events having been deemed to indicate that the block of information includes one or more language objects that should be made accessible by the one or more routines for use in disambiguating ambiguous inputs received by the handheld electronic device; and
if it is determined that at least one of the one or more predetermined events has occurred, obtaining (125) a number of second language objects from said block of information and storing (130) the number of second language objects in a temporary dictionary included in the memory, said temporary dictionary being accessible by the one or more routines for use in disambiguating ambiguous inputs received by the handheld electronic device, wherein said one or more predetermined events include a predetermined period of time passing following said displaying step without said handheld electronic device receiving an additional input from said user.

2. The method according to claim 1, wherein said block of information is a web page.

3. The method according to claim 1, wherein said block of information is one of an email message or an attachment thereto, an SMS message or an attachment thereto, an MMS message or an attachment thereto, and an instant message or an attachment thereto.

4. The method according to claim 1, wherein said one or more predetermined events include said handheld electronic device receiving an input from said user requesting that a second representation of at least a second portion of said block of information be displayed on the handheld electronic device.

5. The method according to claim 1, wherein the storing the number of second language objects in a temporary dictionary comprises storing the number of second language objects in a record associated with said block of information and deleting said record from the memory after a predetermined period of time has passed since said storing.

6. The method according to claim 1, further comprising receiving a first ambiguous input in said handheld electronic device, employing said one or more routines to disambiguate said first ambiguous input and display a number of possible intended inputs on said handheld electronic device, receiving a selection of one of said possible intended inputs, determining whether the selected one of said possible intended inputs is based on one of said second language objects stored in said temporary dictionary, and if the selected one of said possible intended inputs is based on one of said second language objects stored in said temporary dictionary, saving the one of said second language objects in said dictionary.

7. The method according to claim 6, further comprising deleting said one of said second language objects from said temporary dictionary.

8. The method according to claim 1, wherein the storing the number of second language objects in a temporary dictionary comprises storing each of the number of second language objects in association with a respective relatively high frequency object.

9. A handheld electronic device (4) comprising:
a reduced keyboard (20);
a display;
a processor (36); and
a memory (40) having stored therein: (i) one or more routines executable by the processor, the one or more routines being adapted to provide a text disambiguation, and (ii) a dictionary including a number of first language objects that is accessible by the one or more routines for use in disambiguating ambiguous inputs received by the handheld electronic device, the one or more routines being further adapted to:
receive a block of information on the handheld electronic device;
display a representation of at least a portion of said block of information on the display;
determine whether at least one of one or more predetermined events has occurred following the display of the representation, each of said one or more predetermined events having been deemed to indicate that the block of information includes one or more language objects that should be made accessible by the one or more routines for use in disambiguating ambiguous inputs received by the handheld electronic device; and
if it is determined that at least one of the one or more predetermined events has occurred, obtain a number of second language objects from said block of information and store the number of second language objects in a temporary dictionary included in the memory, said temporary dictionary being accessible by the one or more routines for use in disambiguating ambiguous inputs entered into the handheld electronic device using said reduced keyboard, wherein said one or more predetermined events include a predetermined period of time passing following said displaying step without said handheld electronic device receiving an additional input from said user.

10. The handheld electronic device (4) according to claim 9, wherein said block of information is a web page.

11. The handheld electronic device (4) according to claim 9, wherein said block of information is one of an email message or an attachment thereto, an SMS message or an attachment thereto, an MMS message or an attachment thereto, and an instant message or an attachment thereto.

12. The handheld electronic device (4) according to claim 9, wherein said one or more predetermined events include said handheld electronic device receiving an input from said user requesting that a second representation of at least a second portion of said block of information be displayed on the handheld electronic device.

13. The handheld electronic device (4) according to claim 9, wherein the one or more routines are adapted to store the number of second language objects in a record associated with said block of information and delete said record from the memory after a predetermined period of time has passed since being stored.

14. The handheld electronic device (4) according to claim 9, said one or more routines being further adapted to receive a first ambiguous input into said handheld electronic device using said reduced keyboard (20), disambiguate said first ambiguous input and display a number of possible intended inputs on said display, receive a selection of one of said possible intended inputs, determine whether the selected one of said possible intended inputs is based on one of said second language objects stored in said temporary dictionary, and if the selected one of said possible intended inputs is based on one of said second language objects stored in said temporary dictionary, save the one of said second language objects in said dictionary.

15. The handheld electronic device (4) according to claim 14, said one or more routines being further adapted to delete said one of said second language objects from said temporary dictionary.

16. The handheld electronic device (4) according to claim 9, wherein said one or more routines are adapted to store the number of second language objects in a temporary dictionary by storing each of the number of second language objects in association with a respective relatively high frequency object.

## Patentansprüche

1. Verfahren zum Erhalten von Daten zur Verwendung auf einem tragbaren elektronischen Gerät (4), das einen Prozessor (36) und einen Speicher (40)umfasst, wobei in dem Speicher gespeichert ist: (i) eine oder mehrere Routinen, die durch den Prozessor ausführbar sind und eine Textdisambiguierungsfunktion bereitstellen, und (ii) ein Wörterbuch, das eine Anzahl von ersten Sprachobjekten umfasst, auf die durch die eine oder mehreren Routinen zur Verwendung beim Vereindeutigen von durch das tragbare elektronische Gerät empfangenen mehrdeutigen Eingaben zugegriffen werden kann, wobei das Verfahren umfasst:
Empfangen (105) eines Informationsblocks auf dem tragbaren elektronischen Gerät;
Anzeigen (105) einer Darstellung von zumindest einem Abschnitt des Informationsblocks auf dem tragbaren elektronischen Gerät;
Bestimmen (10, 15), ob mindestens ein Ereignis von einem oder mehreren vorbestimmten Ereignissen im Anschluss an das Anzeigen aufgetreten ist, wobei jedes des einen oder der mehreren Ereignisse so angesehen wird, dass es anzeigt, dass der Informationsblock ein oder mehrere Sprachobjekte umfasst, auf die durch die eine oder mehreren Routinen für die Verwendung beim Vereindeutigen von durch das tragbare elektronische Gerät empfangenen mehrdeutigen Eingaben zugegriffen werden sollte; und
wenn bestimmt wird, dass mindestens eines von dem einen oder den mehreren Ereignissen aufgetreten ist, Erhalten (125) einer Anzahl von zweiten Sprachobjekten von dem Informationsblock und Speichern (130) der Anzahl von zweiten Sprachobjekten in einem in dem Speicher umfassten temporären Wörterbuch, wobei auf das temporäre Wörterbuch durch die eine oder mehreren Routinen für die Verwendung beim Vereindeutigen von durch das tragbare elektronische Gerät empfangenen mehrdeutigen Eingaben zugegriffen werden kann, wobei das eine oder die mehreren vorbestimmten Ereignisse eine vorbestimmte Zeitdauer umfassen, die im Anschluss an den Anzeigeschritt abläuft, ohne dass das tragbare elektronische Gerät eine zusätzliche Eingabe von dem Benutzer empfängt.

2. Verfahren nach Anspruch 1, wobei der Informationsblock eine Webseite ist.

3. Verfahren nach Anspruch 1, wobei der Informationsblock eines von einer E-Mail-Nachricht oder einer Anlage dazu, einer SMS-Nachricht oder einer Anlage dazu, einer MMS-Nachricht oder einer Anlage dazu und einer Sofortnachricht oder einer Anlage dazu ist.

4. Verfahren nach Anspruch 1, wobei das eine oder die mehreren vorbestimmten Ereignisse umfassen, dass das tragbare elektronische Gerät eine Eingabe von dem Benutzer empfängt, die anfordert, dass eine zweite Darstellung von mindestens einem zweiten Abschnitt des Informationsblocks auf dem tragbaren elektronischen Gerät angezeigt wird.

5. Verfahren nach Anspruch 1, wobei das Speichern der Anzahl von zweiten Sprachobjekten in einem temporären Wörterbuch das Speichern der Anzahl von zweiten Sprachobjekten in einem dem Informationsblock zugeordneten Datensatz und das Löschen des Datensatzes aus dem Speicher, nachdem eine vorbestimmte Zeitdauer seit dem Speichern abgelaufen ist, umfasst.

6. Verfahren nach Anspruch 1, ferner umfassend das Empfangen einer ersten mehrdeutigen Eingabe in das tragbare elektronische Gerät, Einsetzen der einen oder mehreren Routinen, um die erste mehrdeutige Eingabe zu vereindeutigen und eine Anzahl von möglichen beabsichtigten Eingaben auf dem tragbaren elektronischen Gerät anzuzeigen, Empfangen einer Wahl von einer der möglichen beabsichtigten Eingaben, Bestimmen, ob die gewählte der möglichen beabsichtigten Eingaben auf einem der in dem temporären Wörterbuch gespeicherten zweiten Sprachobjekte basiert, und wenn die gewählte der möglichen beabsichtigten Eingaben auf einem der in dem temporären Wörterbuch gespeicherten zweiten Sprachobjekte basiert, Speichern des einen der zweiten Sprachobjekte in dem Wörterbuch.

7. Verfahren nach Anspruch 6, ferner umfassend das Löschen des einen der zweiten Sprachobjekte aus dem temporären Wörterbuch.

8. Verfahren nach Anspruch 1, wobei das Speichern der Anzahl von zweiten Sprachobjekten in einem temporären Wörterbuch das Speichern eines jeden von der Anzahl von zweiten Sprachobjekten in Zuordnung zu einem jeweiligen relativ hochfrequenten Objekt umfasst.

9. Tragbares elektronisches Gerät (4), umfassend:
eine reduzierte Tastatur (20);
eine Anzeige;
einen Prozessor (36); und
einen Speicher (40), in dem gespeichert ist: (i) eine oder mehrere Routinen, die durch den Prozessor ausführbar sind, wobei die eine oder mehreren Routinen dazu eingerichtet sind, eine Textdisambiguierung bereitzustellen, und (ii) ein Wörterbuch, das eine Anzahl von ersten Sprachobjekten umfasst, auf die durch die eine oder mehreren Routinen zur Verwendung beim Vereindeutigen von durch das tragbare elektronische Gerät empfangenen mehrdeutigen Eingaben zugegriffen werden kann, wobei die eine oder die mehreren Routinen ferner dazu eingerichtet sind, um:
einen Informationsblock auf dem tragbaren elektronischen Gerät zu empfangen;
eine Darstellung von zumindest einem Abschnitt des Informationsblocks auf der Anzeige anzuzeigen;
zu bestimmen, ob mindestens ein Ereignis von einem oder mehreren vorbestimmten Ereignissen im Anschluss an die Anzeige aufgetreten ist, wobei jedes des einen oder der mehreren Ereignisse so angesehen wird, dass es anzeigt, dass der Informationsblock eines oder mehrere Sprachobjekte umfasst, auf das durch die eine oder mehreren Routinen für die Verwendung beim Vereindeutigen von durch das tragbare elektronische Gerät empfangenen mehrdeutigen Eingaben zugegriffen werden sollte; und
wenn bestimmt wird, dass mindestens ein Ereignis von dem einen oder den mehreren Ereignissen aufgetreten ist, eine Anzahl von zweiten Sprachobjekten von dem Informationsblock zu erhalten und die Anzahl von zweiten Sprachobjekten in einem in dem Speicher umfassten temporären Wörterbuch zu speichern, wobei auf das temporäre Wörterbuch durch die eine oder mehreren Routinen für die Verwendung beim Vereindeutigen von in das tragbare elektronische Gerät unter Verwendung der reduzierten Tastatur eingegeben mehrdeutigen Eingaben zugegriffen werden kann, wobei das eine oder die mehreren vorbestimmten Ereignisse eine vorbestimmte Zeitdauer umfassen, die im Anschluss an den Anzeigeschritt abläuft, ohne dass das tragbare elektronische Gerät eine zusätzliche Eingabe von dem Benutzer empfängt.

10. Tragbares elektronisches Gerat (4) nach Anspruch 9, wobei der Informationsblock eine Webseite ist.

11. Tragbares elektronisches Gerät (4) nach Anspruch 9, wobei der Informationsblock eines von einer E-Mail-Nachricht oder einer Anlage dazu, einer SMS-Nachricht oder einer Anlage dazu, einer MMS-Nachricht oder einer Anlage dazu und einer Sofortnachricht oder einer Anlage dazu ist.

12. Tragbares elektronisches Gerät (4) nach Anspruch 9, wobei das eine oder die mehreren vorbestimmten Ereignisse umfassen, dass das tragbare elektronische Gerät eine Eingabe von dem Benutzer empfängt, die anfordert, dass eine zweite Darstellung von mindestens einem zweiten Abschnitt des Informationsblocks auf dem tragbaren elektronischen Gerät angezeigt wird.

13. Tragbares elektronisches Gerät (4) nach Anspruch 9, wobei die eine oder mehreren Routinen dazu eingerichtet sind, die Anzahl von zweiten Sprachobjekten in einem dem Informationsblock zugeordneten Datensatz zu speichern und den Datensatzes aus dem Speicher zu löschen, nachdem eine vorbestimmte Zeitdauer seit dem Speichern abgelaufen ist.

14. Tragbares elektronisches Gerät (4) nach Anspruch 9, wobei die eine oder mehreren Routinen ferner dazu eingerichtet sind, eine unter Verwendung der reduzierten Tastatur (20) in das tragbare elektronische Gerät eingegebene erste mehrdeutige Eingabe zu empfangen, die erste mehrdeutige Eingabe zu vereindeutigen und eine Anzahl von möglichen beabsichtigten Eingaben auf der Anzeige anzuzeigen, eine Wahl von einer der möglichen beabsichtigten Eingaben zu empfangen, zu bestimmen, ob die gewählte der möglichen beabsichtigten Eingaben auf einem der in dem temporären Wörterbuch gespeicherten zweiten Sprachobjekte basiert, und wenn die gewählte der möglichen beabsichtigten Eingaben auf einem der in dem temporären Wörterbuch gespeicherten zweiten Sprachobjekte basiert, das eine der zweiten Sprachobjekte in dem Wörterbuch zu speichern.

15. Tragbares elektronisches Gerät (4) nach Anspruch (14), wobei die eine oder die mehreren Routinen ferner dazu eingerichtet sind, das eine von den zweiten Sprachobjekten aus dem temporären Wörterbuch zu löschen.

16. Tragbares elektronisches Gerät (4) nach Anspruch 9, wobei die eine oder mehreren Routinen dazu eingerichtet sind, die Anzahl von zweiten Sprachobjekten in einem temporären Wörterbuch zu speichern, indem ein jedes von der Anzahl von zweiten Sprachobjekten in Zuordnung zu einem jeweiligen relativ hochfrequenten Objekt gespeichert wird.

## Revendications

1. Procédé d'obtention de données destiné à être utilisé sur un dispositif électronique portable (4) qui comporte un processeur (36) et une mémoire (40), dans la mémoire sont stockés : (i) une ou plusieurs routines pouvant être exécutées par le processeur et fournissant une fonction de désambiguïsation de texte, et (ii) un dictionnaire comportant un certain nombre de premiers objets de langage qui est accessible par les une ou plusieurs routines destinées à être utilisées lors de la désambiguïsation d'entrées ambiguës reçues par le dispositif électronique portable, le procédé consistant à :
recevoir (105) un bloc d'informations sur le dispositif électronique portable ;
afficher (105) une représentation d'au moins une partie dudit bloc d'informations sur le dispositif électronique portable ;
déterminer (10, 15) si au moins l'un parmi un ou plusieurs événements prédéterminés a eu lieu suite audit affichage, chacun desdits un ou plusieurs événements prédéterminés étant supposé indiquer que le bloc d'informations comporte un ou plusieurs objets de langage qui devraient être rendus accessibles par les une ou plusieurs routines destinées à être utilisées lors de la désambiguïsation d'entrées ambiguës reçues par le dispositif électronique portable ; et
s'il est déterminé qu'au moins l'un parmi les un ou plusieurs événements prédéterminés a eu lieu, obtenir (125) un certain nombre de deuxièmes objets de langage à partir dudit bloc d'informations et stocker (130) le nombre de deuxièmes objets de langage dans un dictionnaire temporaire inclus dans la mémoire, ledit dictionnaire temporaire étant accessible par les une ou plusieurs routines destinées à être utilisées lors de la désambiguïsation d'entrées ambiguës reçues par le dispositif électronique portable, où lesdits un ou plusieurs événements prédéterminés comportent une période de temps prédéterminée se déroulant suite à ladite étape d'affichage sans que ledit dispositif électronique portable ne reçoive une entrée supplémentaire provenant dudit utilisateur.

2. Procédé selon la revendication 1, dans lequel ledit bloc d'informations est une page web.

3. Procédé selon la revendication 1, dans lequel ledit bloc d'informations est l'un parmi un message électronique ou une pièce jointe à celui-ci, un message SMS ou une pièce jointe à celui-ci, un message MMS ou une pièce jointe à celui-ci, et un message instantané ou une pièce jointe à celui-ci.

4. Procédé selon la revendication 1, dans lequel lesdits un ou plusieurs événements prédéterminés comportent le fait de recevoir, par le biais dudit dispositif électronique portable, une entrée provenant dudit utilisateur demandant qu'une deuxième représentation d'au moins une deuxième partie dudit bloc d'informations soit affichée sur le dispositif électronique portable.

5. Procédé selon la revendication 1, dans lequel le stockage du nombre de deuxièmes objets de langage dans un dictionnaire temporaire consiste à stocker le nombre de deuxièmes objets de langage dans un enregistrement associé audit bloc d'informations et effacer ledit enregistrement de la mémoire après qu'une période de temps prédéterminée s'est écoulée depuis ledit stockage.

6. Procédé selon la revendication 1, consistant en outre à recevoir une première entrée ambiguë dans ledit dispositif électronique portable, à utiliser lesdites une ou plusieurs routines pour désambiguïser ladite première entrée ambigüe et afficher un certain nombre d'entrées prévues possibles sur ledit dispositif électronique portable, à recevoir une sélection de l'une desdites entrées prévues possibles, à déterminer si l'entrée sélectionnée desdites entrées prévues possibles est basée sur l'un desdits deuxièmes objets de langage stockés dans ledit dictionnaire temporaire, et si l'entrée sélectionnée desdites entrées prévues possibles est basée sur l'un desdits deuxièmes objets de langage stockés dans ledit dictionnaire temporaire, à sauvegarder l'un desdits deuxièmes objets de langage dans ledit dictionnaire.

7. Procédé selon la revendication 6, consistant en outre à effacer ledit objet desdits deuxièmes objets de langage dudit dictionnaire temporaire.

8. Procédé selon la revendication 1, dans lequel le stockage du nombre de deuxièmes objets de langage dans un dictionnaire temporaire consiste à stocker chacun du nombre de deuxièmes objets de langage en association avec un objet respectif de fréquence relativement haute.

9. Dispositif électronique portable (4) comprenant :
un clavier réduit (20) ;
un écran d'affichage ;
un processeur (36); et
une mémoire (40) dans laquelle sont stockés : (i) une ou plusieurs routines pouvant être exécutées par le processeur, les une ou plusieurs routines étant adaptées pour fournir une désambiguïsation de texte, et (ii) un dictionnaire comportant un certain nombre de premiers objets de langage qui est accessible par les une ou plusieurs routines destinées à être utilisées lors de la désambiguïsation d'entrées ambiguës reçues par le dispositif électronique portable, les une ou plusieurs routines étant adaptées en outre pour :
recevoir un bloc d'informations sur le dispositif électronique portable ;
afficher une représentation d'au moins une partie dudit bloc d'informations sur l'écran d'affichage ;
déterminer si au moins l'un parmi un ou plusieurs événements prédéterminés a eu lieu suite à l'affichage de la représentation, chacun desdits un ou plusieurs événements prédéterminés étant supposé indiquer que le bloc d'informations comporte un ou plusieurs objets de langage qui devraient être rendus accessibles par les une ou plusieurs routines destinées à être utilisées lors de la désambiguïsation d'entrées ambiguës reçues par le dispositif électronique portable ; et
s'il est déterminé qu'au moins l'un parmi les un ou plusieurs événements prédéterminés a eu lieu, obtenir un certain nombre de deuxièmes objets de langage à partir dudit bloc d'informations et stocker le nombre de deuxièmes objets de langage dans un dictionnaire temporaire inclus dans la mémoire, ledit dictionnaire temporaire étant accessible par les une ou plusieurs routines destinées à être utilisées lors de la désambiguïsation d'entrées ambiguës entrées dans le dispositif électronique portable en utilisant ledit clavier réduit, où lesdits un ou plusieurs événements prédéterminés comportent une période de temps prédéterminée se déroulant suite à ladite étape d'affichage sans que ledit dispositif électronique portable ne reçoive une entrée supplémentaire provenant dudit utilisateur.

10. Dispositif électronique portable (4) selon la revendication 9, dans lequel ledit bloc d'informations est une page web.

11. Dispositif électronique portable (4) selon la revendication 9, dans lequel ledit bloc d'informations est l'un parmi un message électronique ou une pièce jointe à celui-ci, un message SMS ou une pièce jointe à celui-ci, un message MMS ou une pièce jointe à celui-ci, et un message instantané ou une pièce jointe à celui-ci.

12. Dispositif électronique portable (4) selon la revendication 9, dans lequel lesdits un ou plusieurs événements prédéterminés comportent le fait de recevoir, par le biais dudit dispositif électronique portable, une entrée provenant dudit utilisateur demandant qu'une deuxième représentation d'au moins une deuxième partie dudit bloc d'informations soit affichée sur le dispositif électronique portable.

13. Dispositif électronique portable (4) selon la revendication 9, dans lequel les une ou plusieurs routines sont adaptées pour stocker le nombre de deuxièmes objets de langage dans un enregistrement associé audit bloc d'informations et effacer ledit enregistrement de la mémoire après qu'une période de temps prédéterminée s'est écoulée depuis le stockage.

14. Dispositif électronique portable (4) selon la revendication 9, lesdites une ou plusieurs routines étant adaptées en outre pour recevoir une première entrée ambigüe dans ledit dispositif électronique portable en utilisant ledit clavier réduit (20), désambiguïser ladite première entrée ambigüe et afficher un certain nombre d'entrées prévues possibles sur ledit écran d'affichage, recevoir une sélection de l'une desdites entrées prévues possibles, déterminer si l'entrée sélectionnée desdites entrées prévues possibles est basée sur l'un desdits deuxièmes objets de langage stockés dans ledit dictionnaire temporaire, et si l'entrée sélectionnée desdites entrées prévues possibles est basée sur l'un desdits deuxièmes objets de langage stockés dans ledit dictionnaire temporaire, sauvegarder l'un desdits deuxièmes objets de langage dans ledit dictionnaire.

15. Dispositif électronique portable (4) selon la revendication 14, lesdites une ou plusieurs routines étant adaptées en outre pour effacer ledit objet desdits deuxièmes objets de langage dudit dictionnaire temporaire.

16. Dispositif électronique portable (4) selon la revendication 9, dans lequel lesdites une ou plusieurs routines sont adaptées pour stocker le nombre de deuxièmes objets de langage dans un dictionnaire temporaire en stockant chacun du nombre de deuxièmes objets de langage en association avec un objet respectif de fréquence relativement haute.
